# EUROPEAN PATENT APPLICATION

(11) **EP 4 679 288 A1**
(43) Date of publication of application: **14.01.2026**
(21) Application number: 25187221.4
(22) Date of filing: 03.07.2025
(51) Int. Cl.: G06F 16/3329

(54) **DETECTING CANDIDATE HALLUCINATIONS IN OUTPUTS OF A RETRIEVAL-AUGMENTED GENERATION ENHANCED LARGE LANGUAGE MODEL**

(30) Priority: 09.07.2024 GB 202409932
(71) Applicant: Vodafone Group Services Limited, Newbury RG14 2FN (GB)
(72) Inventor: MOHAMED-WAHEED, Mohamed, London, W2 6BY (GB); HOU, Jindong, London, W2 6BY (GB); SAMPSON, Joseph, London, W2 6BY (GB); KALIVARAPU, Shahaja, London, W2 6BY (GB)
(74) Representative: Boult Wade Tennant LLP

(57) **Abstract**

The disclosure provides runtime and training methods, computing apparatus, and computer readable media for use in detecting candidate hallucinations in outputs of a Retrieval-Augmented Generation (RAG) enhanced Large Language Model (LLM) trained to retrieve documents from a closed domain knowledge base responsive to an input query, and generate an LLM output vector based on the query and any retrieved documents. The method comprises inputting an LLM output vector received from an LLM to an encoder part of a Variational Autoencoder and receiving from an encoder output layer thereof an encoder output vector having values representing a distribution of the LLM output vector in a dimensionally reduced latent space. The Variational Autoencoder is trained using a training dataset of LLM output vectors generated by the LLM labelled as normal outputs of the LLM or hallucination outputs of the LLM, thereby generating characteristic distributions of normal outputs and hallucination outputs of the LLM in the latent space based on the documents in the closed domain knowledge base. By comparing the encoder output vector with the learned characteristic distribution of normal outputs of the LLM and/or the distribution of hallucination outputs of the LLM, an indication of whether or not the LLM output vector is likely to be a hallucination is generated.

## Description

### TECHNICAL FIELD

The present disclosure relates to runtime and training methods, computing apparatus, and computer readable media for use in detecting candidate hallucinations in outputs of a Retrieval-Augmented Generation (RAG) enhanced Large Language Model (LLM). In particular, the present disclosure relates to detecting candidate hallucinations in RAG-enhanced LLMs trained to retrieve documents from a closed domain knowledge base responsive to an input query, and generate an LLM output vector based on the query and any retrieved documents.

### BACKGROUND

In the domain of Retrieval-Augmented Generation (RAG) models, the phenomenon of AI-generated hallucinations represents a considerable impediment to the reliability and precision of their outputs, limiting the usefulness and adoption of such techniques for example in enhancing Large Language Models (LLMs).

RAG models amalgamate retrieval mechanisms with generative algorithms such as LLMs to enhance the contextual relevance and factual accuracy of the outputs through the incorporation of external knowledge bases. Despite such enhancements, the introduction of hallucinations-manifested as incorrect, illogical, or factually incoherent outputs-persists.

This impacts the credibility and utility of RAG models, particularly in critical applications like customer support, creative content generation, and information retrieval systems.

It is in this context the present disclosure has been devised.

### BRIEF SUMMARY

The disclosure provides runtime and training methods, computing apparatus, and computer readable media for use in detecting candidate hallucinations in outputs of a Retrieval-Augmented Generation (RAG) enhanced Large Language Model (LLM) trained to retrieve documents from a closed domain knowledge base responsive to an input query, and generate an LLM output vector based on the query and any retrieved documents. The method comprises inputting an LLM output vector received from an LLM to an encoder part of a Variational Autoencoder and receiving from an encoder output layer thereof an encoder output vector having values representing a distribution of the LLM output vector in a dimensionally reduced latent space. The Variational Autoencoder is trained using a training dataset of LLM output vectors generated by the LLM labelled as normal outputs of the LLM or hallucination outputs of the LLM, thereby generating characteristic distributions of normal outputs and hallucination outputs of the LLM in the latent space based on the documents in the closed domain knowledge base. By comparing the encoder output vector with the learned characteristic distribution of normal outputs of the LLM and/or the distribution of hallucination outputs of the LLM, an indication of whether or not the LLM output vector is likely to be a hallucination is generated.

Thus, viewed from one aspect, the present invention provides a method for use in detecting candidate hallucinations in outputs of a Retrieval-Augmented Generation (RAG) enhanced Large Language Model (LLM) trained to retrieve documents from a closed domain knowledge base responsive to an input query, and generate an LLM output vector based on the query and any retrieved documents. The method includes receiving from the LLM an LLM output vector representing output tokens generated by the LLM responsive to a query, and inputting the LLM output vector to an encoder input layer of an encoder part of a neural network configured as a Variational Autoencoder, the encoder input layer arranged to have nodes corresponding to the LLM output vector. The method further includes receiving from an encoder output layer of the encoder part of the Variational Autoencoder an encoder output vector having values representing a distribution of the LLM output vector in a dimensionally reduced latent space. The encoder output layer is connected to the encoder input layer through one or more hidden layers having nodes with weights trained together with a corresponding decoder part of the Variational Autoencoder to allow the decoder part to reconstruct at a decoder output layer thereof the LLM output vector from the encoded distribution in the latent space. The Variational Autoencoder has been trained using a training dataset of LLM output vectors generated by the LLM from the retrieved documents responsive to input queries. The training dataset is labelled as normal outputs of the LLM or hallucination outputs of the LLM. The training of the Variational Autoencoder thereby generates characteristic distributions of normal outputs and hallucination outputs of the LLM in the latent space based on the documents in the closed domain knowledge base. The method further comprises comparing the encoder output vector with the learned characteristic distribution of normal outputs of the LLM and/or the distribution of hallucination outputs of the LLM, and generating an indication of whether or not the LLM output vector may be likely to be a hallucination based on the comparison.

In this way, the distribution of the document or documents stored in the closed domain knowledge base can be identified using a Variational Auto Encoder (VAE) architecture with a small latent space dimension to characterise the distribution of normal outputs of the LLM. In this way, the borders of the contextual meaning of the document and LLM responses deemed normal and non-hallucinatory can be automatically learned and clearly understood, such that outputs from the LLM falling outside this distribution in the latent space can be identified as candidate hallucinations. This allows them to be treated accordingly.

In embodiments, the closed domain knowledge base may consist of a list of specified documents or a structured data repository of finite and defined scope. In this way, the VAE can accurately characterise the distribution of normal outputs of the LLM based on a closed list of documents, or a closed data repository. The VAE can be periodically re-trained if new documents are added to the closed domain knowledge base, but the VAE can learn the distribution of a closed set of known documents and reliably identify candidate hallucinations.

In embodiments, the trained VAE may have learned the distribution and structure of the documents in the closed domain knowledge base in the low dimension latent space, wherein the distribution and structure of the documents in the closed domain knowledge base has been generated by the VAE characterising the normal outputs of the LLM generated responsive to queries by the LLM retrieving documents from the closed domain knowledge base. In this way, the operation of the RAG-enhanced LLM in its interaction with the closed domain knowledge base can be monitored and characterised. That is, the queries of the RAG-enhanced LLM operating on the documents in the closed domain knowledge base generate a training dataset that the VAE uses to learn the characteristic distribution of normal outputs of the LLM and/or the characteristic distribution of hallucination outputs of the LLM.

In embodiments, comparing the encoder output vector with the learned characteristic distribution of normal outputs of the LLM and/or the hallucination outputs of the LLM may include determining a metric representative of a distance between the encoder output vector and the learned characteristic distribution of normal outputs of the LLM and/or the hallucination outputs of the LLM, wherein the distance metric may be indicative of the dissimilarity between the encoder output vector and the distribution of normal outputs of the LLM.

In embodiments, generating an indication of whether or not the LLM output vector is likely to be a hallucination based on the comparison may include determining, based on the determined distance metric, a metric indicating whether the LLM output vector is likely to be an hallucination. In embodiments, determining, based on the determined distance metric, a metric indicating whether the LLM output vector is likely to be an hallucination may include comparing the determined distance metric to a threshold distance value above which encoder output vector is a candidate hallucination. In this way, a metric of the likelihood of an LLM output vector being a hallucination can be generated and a threshold applied above which an LLM output vector is deemed to be a candidate hallucination.

In embodiments, the method may also include, when an indication is generated that the LLM output vector may be likely to be a hallucination, performing one or more of:
- providing an alert to the LLM that the LLM output vector may be a candidate hallucination,
- providing an instruction to the LLM to discard the LLM output vector,
- providing an instruction to the LLM to update the prompt provided to the Retrieval-Augmented Generation (RAG) enhanced Large Language Model (LLM) and re-run the query, the prompt being updated to reduce the likelihood that the LLM output vector is a candidate hallucination.

In this way, the indication of a candidate hallucination may be used to enhance the reliability of the RAG-enhanced LLM by for example, alerting the user such that the user is aware of the risk, causing the LLM output vector to be discarded, or causing the LLM to provide another LLM output vector where the prompt is updated to reduces the likelihood the LLM output vector is a candidate hallucination.

In embodiments, the method may also include generating a training dataset for the Variational Autoencoder using a prompting Large Language Model (LLM) to generate queries for the Retrieval-Augmented Generation (RAG) enhanced Large Language Model (LLM) to generate LLM output vectors, the generated LLM output vectors being used to provide a training set of labelled LLM output vectors used to train the Variational Autoencoder to determine the characteristic distribution of normal outputs of the LLM and/or the distribution of hallucination outputs of the LLM. In embodiments, the prompting Large Language Model (LLM) may be configured to search across the distribution of outputs of the LLM in the latent space. In this way, a prompting Large Language Model can be used to generate the training dataset. In other implementations, a training dataset may be manually created by domain knowledge experts crafting queries for the LLM to generate a training dataset of LLM output vectors that allow the distribution of outputs of the LLM in the latent space to be explored for the closed domain knowledge base.

In embodiments, the method may also include receiving a labelled training dataset of LLM output vectors each labelled as either a normal LLM output vector or a hallucination LLM output vector, wherein the labelling may be generated by one or more domain knowledge experts. The manual labelling of the training dataset by domain knowledge experts allows the characteristic distribution of normal outputs of the LLM and characteristic distribution of hallucination outputs of the LLM in the latent space to be discovered.

In embodiments, the method may also include, for each one of plural LLM output vectors of the training dataset, training the Variational Autoencoder by inputting the LLM output vector to the encoder input layer of the encoder part of a Variational Autoencoder, and receiving from an encoder output layer of the encoder part of the Variational Autoencoder an encoder output vector having values representing a distribution of the LLM output vector in a dimensionally reduced latent space. Training the Variational Autoencoder further includes sampling values from the distribution defined by the encoder output vector to generate a decoder input vector representative of the LLM output vector in the latent space, and inputting the decoder input vector to a decoder input layer of the decoder part of the Variational Autoencoder. Training the Variational Autoencoder further includes receiving from a decoder output layer of the decoder part of the Variational Autoencoder a reconstructed version of the LLM output vector, the decoder output layer being connected to the decoder input layer through one or more hidden layers having nodes with weights. Training the Variational Autoencoder further includes determining a loss function characterising a reconstruction error between the LLM output vector and the reconstructed version of the LLM output vector, and using an appropriate optimisation algorithm operating on the loss function, updating the connecting node weights of the hidden layers of the encoder neural network and decoder neural network to seek to minimise the loss function. Training the Variational Autoencoder proceeds until the loss function converges and the Variational Autoencoder effectively reconstructs the LLM output vector. The method may also include, based on the labels applied to the LLM output vectors in the training dataset, determining the distribution of normal outputs of the LLM in the latent space, and determining the distribution of hallucination outputs of the LLM in the latent space. In this way, characteristic distribution of normal outputs of the LLM and the characteristic distribution of hallucination outputs of the LLM in the latent space may be learned in a process of training the Variational Autoencoder to allow the Variational Autoencoder to be used to identify of candidate hallucinations of the RAG-enhanced LLM at runtime.

Viewed from another aspect, the present invention provides a computing apparatus for use in detecting candidate hallucinations in outputs of a Retrieval-Augmented Generation (RAG) enhanced Large Language Model (LLM) trained to retrieve documents from a closed domain knowledge base responsive to an input query, and generate an LLM output vector based on the query and any retrieved documents. The computing apparatus may include one or more processors. The computing apparatus also includes a memory storing instructions that, when executed by the processor, configure the apparatus to receive from the LLM an LLM output vector representing output tokens generated by the LLM responsive to a query, input the LLM output vector to an encoder input layer of an encoder part of a neural network configured as a Variational Autoencoder, the encoder input layer arranged to have nodes corresponding to the LLM output vector, receive from an encoder output layer of the encoder part of the Variational Autoencoder an encoder output vector having values representing a distribution of the LLM output vector in a dimensionally reduced latent space, the encoder output layer being connected to the encoder input layer through one or more hidden layers having nodes with weights trained together with a corresponding decoder part of the Variational Autoencoder to allow the to decoder part to reconstruct at a decoder output layer thereof the LLM output vector from the encoded distribution in the latent space, the Variational Autoencoder having been trained using a training dataset of LLM output vectors generated by the LLM from the retrieved documents responsive to input queries, the training dataset labelled as normal outputs of the LLM or hallucination outputs of the LLM, the training of the Variational Autoencoder thereby generating characteristic distributions of normal outputs and hallucination outputs of the LLM in the latent space based on the documents in the closed domain knowledge base, compare the encoder output vector with the learned characteristic distribution of normal outputs of the LLM and/or the distribution of hallucination outputs of the LLM, and generate an indication of whether or not the LLM output vector may be likely to be a hallucination based on the comparison.

Viewed from another aspect, the present invention provides a non-transitory computer-readable storage medium, the computer-readable storage medium including instructions for use in detecting candidate hallucinations in outputs of a Retrieval-Augmented Generation (RAG) enhanced Large Language Model (LLM) trained to retrieve documents from a closed domain knowledge base responsive to an input query, and generate an LLM output vector based on the query and any retrieved documents. When executed by one or processors of a computing apparatus, the instructions cause the computing apparatus to receive from the LLM an LLM output vector representing output tokens generated by the LLM responsive to a query, input the LLM output vector to an encoder input layer of an encoder part of a neural network configured as a Variational Autoencoder, the encoder input layer arranged to have nodes corresponding to the LLM output vector, receive from an encoder output layer of the encoder part of the Variational Autoencoder an encoder output vector having values representing a distribution of the LLM output vector in a dimensionally reduced latent space, the encoder output layer being connected to the encoder input layer through one or more hidden layers having nodes with weights trained together with a corresponding decoder part of the Variational Autoencoder to allow the to decoder part to reconstruct at a decoder output layer thereof the LLM output vector from the encoded distribution in the latent space, the Variational Autoencoder having been trained using a training dataset of LLM output vectors generated by the LLM from the retrieved documents responsive to input queries, the training dataset labelled as normal outputs of the LLM or hallucination outputs of the LLM, the training of the Variational Autoencoder thereby generating characteristic distributions of normal outputs and hallucination outputs of the LLM in the latent space based on the documents in the closed domain knowledge base, compare the encoder output vector with the learned characteristic distribution of normal outputs of the LLM and/or the distribution of hallucination outputs of the LLM, and generate an indication of whether or not the LLM output vector may be likely to be a hallucination based on the comparison.

Viewed from another aspect, the present invention provides a method of training a Variational Autoencoder (VAE) for use in detecting candidate hallucinations in outputs of a Retrieval-Augmented Generation (RAG) enhanced Large Language Model (LLM) trained to retrieve documents from a closed domain knowledge base responsive to an input query, and generate an LLM output vector based on the query and any retrieved documents. The method includes receiving a labelled training dataset of LLM output vectors each representing output tokens generated by the LLM responsive to a query and each labelled as either a normal LLM output vector or a hallucination LLM output vector. The method also includes for each one of plural LLM output vectors of the training dataset, training the Variational Autoencoder by inputting the LLM output vector to an encoder input layer of an encoder part of a Variational Autoencoder, the encoder input layer arranged to have nodes corresponding to the LLM output vector, and receiving from an encoder output layer of the encoder part of the Variational Autoencoder an encoder output vector having values representing a distribution of the LLM output vector in a dimensionally reduced latent space, the encoder output layer being connected to the encoder input layer through one or more hidden layers having nodes with weights,. Training the Variational Autoencoder further includes sampling values from the distribution defined by the encoder output vector to generate a decoder input vector representative of the LLM output vector in the latent space, and inputting the decoder input vector to a decoder input layer of a corresponding decoder part of the Variational Autoencoder. Training the Variational Autoencoder further includes receiving from a decoder output layer of the decoder part of the Variational Autoencoder a reconstructed version of the LLM output vector, the decoder output layer being connected to the decoder input layer through one or more hidden layers having nodes with weights. Training the Variational Autoencoder further includes determining a loss function characterising a reconstruction error between the LLM output vector and the reconstructed version of the LLM output vector, and, using an appropriate optimisation algorithm operating on the loss function, updating the connecting node weights of the hidden layers of the encoder neural network and decoder neural network to seek to minimise the loss function. Training the Variational Autoencoder proceeds until the loss function converges and the Variational Autoencoder effectively reconstructs the LLM output vector. Based on the labelling of the LLM output vectors in the training dataset, the training of the Variational Autoencoder thereby generates characteristic distributions of normal outputs and hallucination outputs of the LLM in the latent space based on the documents in the closed domain knowledge base.

It will be appreciated from the foregoing disclosure and the following detailed description of the examples that certain features and implementations described as being optional in relation to any given aspect of the disclosure set out above should be understood by the reader as being disclosed also in combination with the other aspects of the present disclosure, where applicable. Similarly, it will be appreciated that any attendant advantages described in relation to any given aspect of the disclosure set out above should be understood by the reader as being disclosed as advantages of the other aspects of the present disclosure, where applicable. That is, the description of optional features and advantages in relation to a specific aspect of the disclosure above is not limiting, and it should be understood that the disclosures of these optional features and advantages are intended to relate to all aspects of the disclosure in combination, where such combination is applicable.

### BRIEF DESCRIPTION OF THE DRAWINGS

Certain examples of the present disclosure will now be described, with reference to the accompanying drawings, in which:
FIG. 1 shows a schematic illustration of an example system including RAG-enhanced LLM for answering queries based on documents retrieved from a closed domain knowledge base, including a Variational Autoencoder in accordance with aspects of the present disclosure;
FIG. 2 shows a schematic illustration of an example computing apparatus 200 for use in detecting candidate hallucinations in outputs of a RAG-enhanced LLM in accordance with aspects of the present disclosure;
FIG. 3 shows a schematic illustration of the architecture of an example Variational Autoencoder implemented by the computing apparatus of FIG. 2 for use in the system of FIG. 1;
FIG. 4 is a flowchart showing an example training method for training the Variational Autoencoder shown in FIG. 3 in accordance with aspects of the present disclosure;
FIG. 5 shows an example learned characteristic distribution of normal outputs of the LLM and learned characteristic distribution of hallucination outputs of the LLM in a simplified representation of the latent space of the trained Variational Autoencoder as shown in FIG. 4; and
FIG. 6 is a flowchart showing an example runtime method for using the trained Variational Autoencoder shown in FIG. 3 to detect candidate hallucinations in outputs of a RAG-enhanced LLM in accordance with aspects of the present disclosure.

### DETAILED DESCRIPTION

Hereinafter, examples of the disclosure are described with reference to the accompanying drawings. However, it should be appreciated that the disclosure is not limited to the described examples, and all changes and/or equivalents or replacements thereto also belong to the scope of the disclosure. The same or similar reference denotations may be used to refer to the same or similar elements throughout the specification and the drawings.

As used herein, the terms "have," "may have," "include," or "may include" a feature (e.g., a number, function, operation, or a component such as a part) indicate the existence of the feature and do not exclude the existence of other features. Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and do not limit the components. These terms are only used to distinguish one component from another. For example, reference to a first component and a second component may indicate different components from each other regardless of the order or importance of the components.

It will be understood that when an element (e.g., a first element) is referred to as being (physically, operatively or communicatively) "coupled with/to," or "connected with/to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

The terms as used herein are provided merely to describe some embodiments thereof, but not to limit the scope of other embodiments of the disclosure. It is to be understood that the singular forms "a," "'an," and "the" include plural references unless the context clearly dictates otherwise. All terms including technical and scientific terms used herein have the same meaning as commonly understood by one of ordinary skill in the art to which the embodiments of the disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

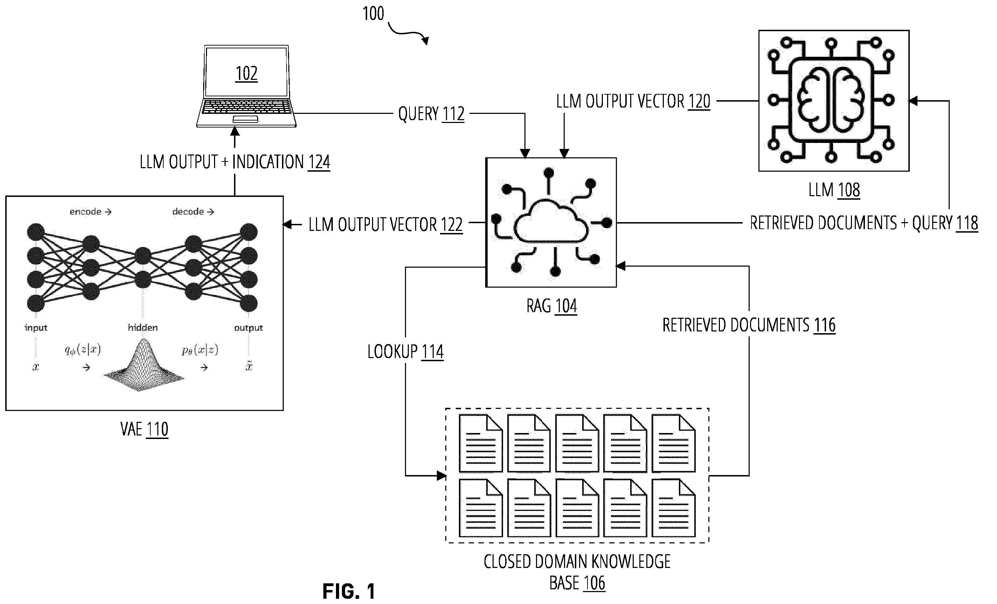

FIG. 1 shows a schematic illustration of an example system including RAG-enhanced LLM for answering queries based on documents retrieved from a closed domain knowledge base, including a Variational Autoencoder in accordance with aspects of the present disclosure;

The RAG-enhanced LLM system 100 with hallucination detection comprises a user device 102, a Retrieval-Augmented Generation framework 104, a closed domain knowledge base 106, a Large Language Model 108, and a Variational Autoencoder 110. Although not described in detail here, both the Retrieval-Augmented Generation framework 104 and the Large Language Model 108 may be hosted as a cloud service accessible to the user device 102 via a suitable network, such as the Internet.

The Large Language Model 108 is provided to answer a query 112 generated by a user device 102. In this respect, a Large Language Model is a type of artificial intelligence model designed to understand, generate, and interpret human language at a vast scale. LLMs are built using deep learning techniques, particularly neural networks with potentially billions of parameters, allowing them to process and analyze extensive corpuses of text data. As a result, LLMs can perform a wide range of natural language processing tasks, such as answering questions, summarizing texts, and generating coherent and contextually relevant sentences or paragraphs. LLMs learn from the patterns in the data they are trained on, enabling them to predict the likelihood of a sequence of words in a sentence, which is the basis for generating text or understanding language input.

To enhance the output of the Large Language Model 108, the query 112 is first passed to a Retrieval-Augmented Generation framework 104. The Retrieval-Augmented Generation framework 104 has access to a closed domain knowledge base 106.

Retrieval-Augmented Generation (RAG) is a methodology in artificial intelligence that combines the capabilities of retrieval-based and generative models to enhance the generation of text or content. In this approach, the Retrieval-Augmented Generation framework 104 first retrieves relevant information from a knowledge base or dataset, in this case the closed domain knowledge base 106, in response to a receipt of the query 112. This may be achieved by the Retrieval-Augmented Generation framework 104 parsing and converting the query 112 to a vector representation of embeddings to assess the semantic properties of the query 112. A lookup 114 is then sent to the closed domain knowledge base 106 based on this conversion to find documents in the closed domain knowledge base 106 having similar vector representations of embeddings, so that semantically similar documents can be identified and retrieved for use by the Large Language Model 108 in responding to the query 112.

In this way, the retrieved documents 116 are returned from the closed domain knowledge base 106 to the Retrieval-Augmented Generation framework 104, and the retrieved documents and query 118 are passed to the Large Language Model 108.

This retrieved documents 116 are then used by as additional context or a reference for the Large Language Model 108, which produces the final output in the form of an LLM output vector 120 which is returned to the Retrieval-Augmented Generation framework 104.

By leveraging external sources of information, RAG models aim to generate responses that are more accurate, and contextually relevant to the documents stored in the closed domain knowledge base 106. Thus, the LLM is information-rich, improving the overall quality and usefulness of the generated content, particularly in tasks requiring factual accuracy and depth in a given domain.

In this respect, the closed domain knowledge base 106 may consist of a list of specified documents or a structured data repository of finite and defined scope. The closed domain knowledge base 106 may be confined to a specific subject area or domain, focusing on a particular topic, discipline, or field of study. Unlike open domain knowledge bases that cater to a broad range of subjects with no restrictions on the content's diversity or content, closed domain knowledge bases are tailored to provide detailed, expert-level information on their specific focus areas. Consequently, they enable more accurate and efficient retrieval of information for tasks requiring domain-specific expertise.

Nevertheless, the RAG-enhanced LLM 118 is still susceptible to AI-generated hallucinations, which can impair the usefulness and uptake of these powerful systems. Hallucinations refer to instances where artificial intelligence models, such as the RAG-enhanced LLM 108, produce outputs that are incorrect, nonsensical, or not grounded in factual accuracy. For example, the Large Language Model 108 may be susceptible to generation of LLM output vectors 120 which are not factually correct taking into account the context and content of the closed domain knowledge base 106. These hallucinations occur when the Large Language Model 108, despite being trained on vast datasets, generates information that does not accurately reflect real-world or domain specific knowledge as contained in the closed domain knowledge base 106, or which lacks logical coherence. AI-generated hallucinations can pose significant challenges in applications where accuracy and reliability of information are critical, such as in document interrogation, or any form of decision-making support. For example, for customer care or medical care applications, hallucinations can present serious problems if the output of the Large Language Model 108 is to be relied on.

To mitigate the impact of hallucinations, the present disclosure provides training and runtime methods 400 and 600 , computing apparatus 200 and computer readable media storing instructions a for implementing a Variational Autoencoder for use in detecting candidate hallucinations in outputs of a RAG-enhanced LLM. As the contents of the closed domain knowledge base 106 are constrained and knowable, the present inventors have realised the distribution of normal (i.e. non-hallucinatory) responses can be characterised in a latent or embedding space by a Variational Autoencoder, and that the characteristic distribution of normal outputs of the LLM (and the characteristic distribution of hallucination outputs of the LLM) can be used to determine whether or not an LLM output vector is a candidate hallucination.

In this respect, before returning the output of the Large Language Model 108 to the user device 102, the Retrieval-Augmented Generation framework 104 passes the LLM output vector 122 (which is the same as LLM output vector 120) on to a computing apparatus 200 that implements a Variational Autoencoder 110 in accordance with aspects of the present disclosure for use in detecting candidate hallucinations in outputs of a RAG-enhanced LLM.

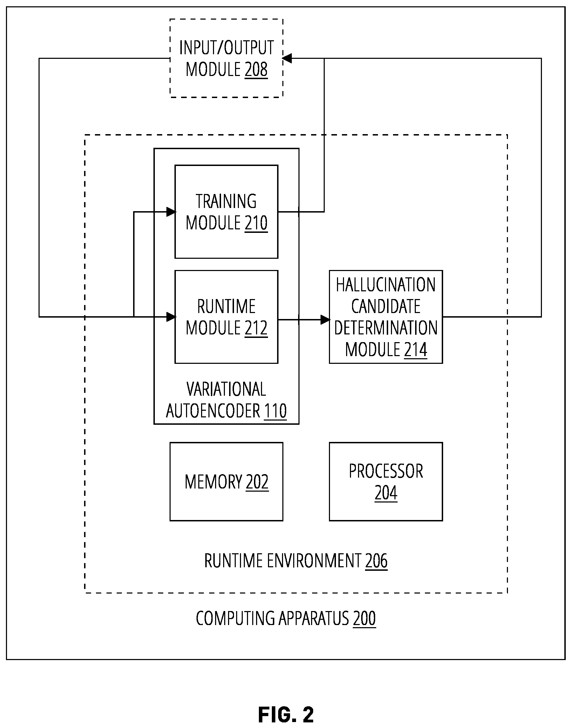

The implementation and training and runtime operation of the Variational Autoencoder 110 will now be described in more detail in relation to FIG. 2, FIG. 3, FIG. 4, FIG. 5 and FIG. 6.

FIG. 2 shows a schematic illustration of an example computing apparatus 200 for use in detecting candidate hallucinations in outputs of a RAG-enhanced LLM in accordance with aspects of the present disclosure.

The computing apparatus 200 comprises a a memory 202, one or more processors 204 and an input/output module 208. A bus system (not shown) may be provided which supports communication between at the least one processor 204, memory 202 and input/output module 208. The computing apparatus 200 may be a general purpose computing apparatus implemented in a desktop or laptop or other suitable standalone device, or it may be implemented in a dedicated server, or virtual server supported in a cloud computing environment accessible to the user device 102 over the Internet. The computing apparatus 200 may or may not also implement the Retrieval-Augmented Generation framework 104 and/or the Large Language Model 108. Any suitable implementation is possible and the example implementation described herein is not intended to be limiting.

The processor 204 executes instructions that can be loaded into memory 202. The processor 204 can include any suitable number(s) and type(s) of processors or other devices in any suitable arrangement. Example types of processor 204 include microprocessors, microcontrollers, digital signal processors, field programmable gate arrays and application specific integrated circuits.

The memory 202 may be provided by any structure(s) capable of storing and facilitating retrieval of information (such as data, program code, and/or other suitable information on a temporary or permanent basis). The memory 202 can represent a random access memory or any other suitable volatile or non-volatile storage device(s). The memory 202 may also contain one or more components or devices supporting longer-term storage of data, such as a read only memory, hard drive, flash memory, or optical disc, which may store software code for loading into the memory 202 at runtime. In use, the processor 204 and memory 202 provide a runtime environment 206 in which instructions or code loaded into the memory 202 can be executed by the processor to generate instances of software modules in the runtime environment 206.

The computing apparatus 200 also comprises input/output module 208 providing a communications interface for receiving data from at least the Retrieval-Augmented Generation framework 104 and providing data to at least the user device 102.

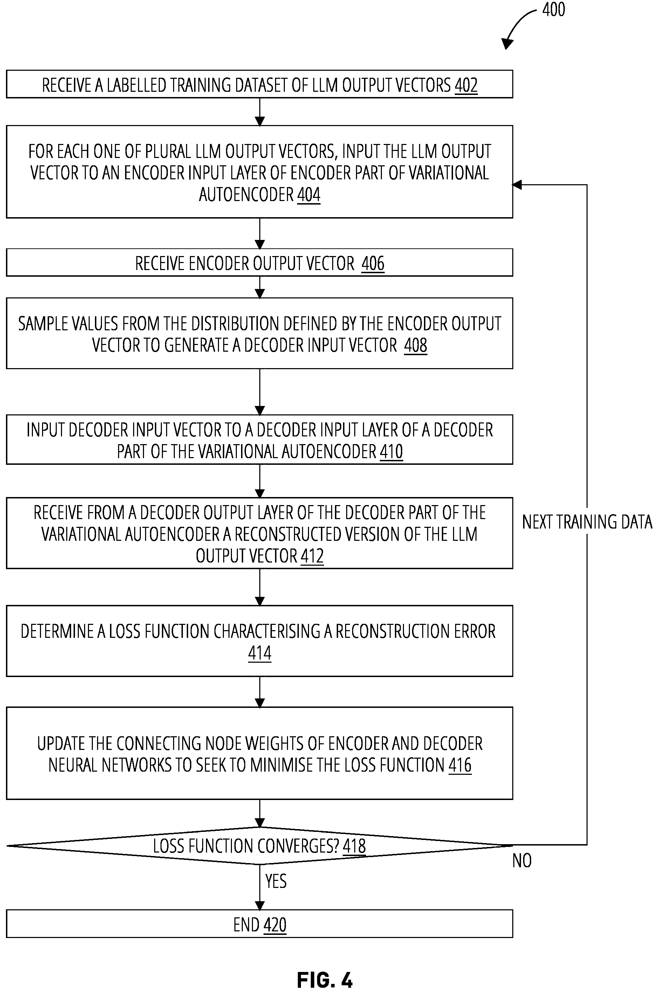

The memory 202 comprises instructions which, when executed by the one or more processors 204, cause one or more of the processors 204 to instantiate a Variational Autoencoder 110 comprising a training module 210 and a runtime module 212, and a hallucination candidate determination module 214. The computing apparatus 200, through operation of the training module 210 on a training dataset, carries out the method 400 shown in FIG. 4 to train the Variational Autoencoder (VAE) to learn distribution of normal outputs of the LLM and/or distribution of hallucination outputs of the LLM. Subsequently, at runtime, the computing apparatus 200, through operation of the runtime module 212 on a runtime example LLM output vectors received from the RAG-enhanced LLM, detects candidate hallucinations in outputs of a RAG-enhanced LLM.

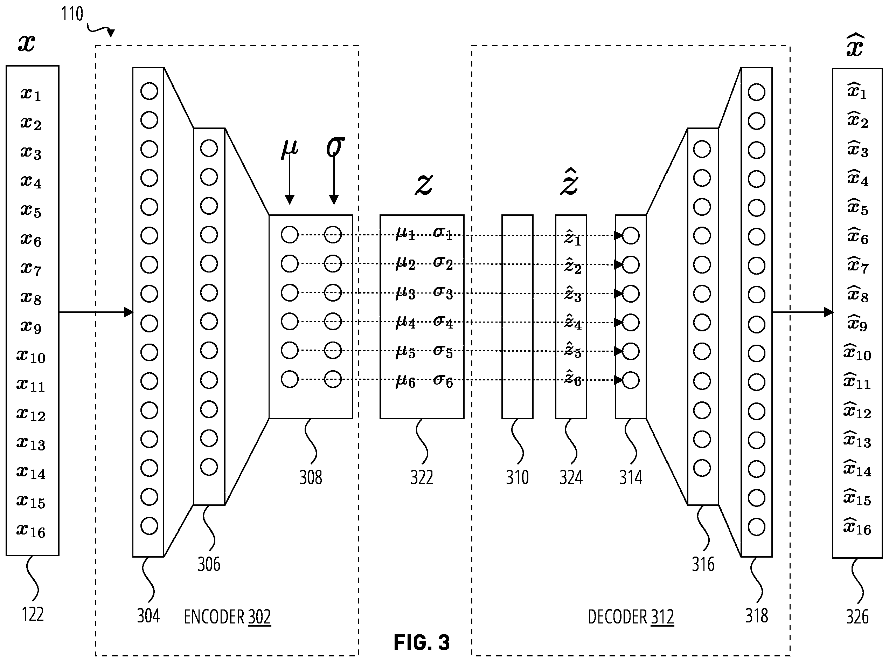

Before describing the training method 400 and runtime method 600, to aid understanding thereof, the structure and principles of operation of the Variational Autoencoder 110 implemented by computing apparatus 200 will first be described with reference to FIG. 3.

FIG. 3 shows a schematic illustration of the architecture of the example Variational Autoencoder 110 implemented by the computing apparatus of FIG. 2 for use in the system of FIG. 1.

A Variational Autoencoder (VAE) is a type of generative model in the field of machine learning and artificial intelligence, designed to learn deep representations of complex data in an unsupervised manner. Unlike traditional autoencoders that learn to encode input data into a compressed representation and then decode it back to reconstruct the input, VAEs introduce a probabilistic twist that models the encoded representations as distributions rather than fixed points. This allows the Variational Autoencoder 110 to learn distributions and how to characterise and thus generate new examples rather than only how to recreate the examples in the training dataset.

The architecture of a VAE consists of two main components: an encoder 302 and a decoder 312. The encoder 302 takes input data as a vector at the encoder input layer 304 and maps it through one or more encoder hidden layer(s) 306 to an encoder output layer 308 which provides a vector comprising two values characterising a distribution in a reduced dimensional latent space *z*, typically a Gaussian distribution characterised by mean *µ* and variance *σ* for each dimension. In this case, the encoder input layer 304 receives from the Retrieval-Augmented Generation framework 104 the LLM output vector 122. That is, the encoder input layer 304 may be configured to receive a vector of the same size as output by the Large Language Model 108. In this way, the Variational Autoencoder 110 learns across the raw outputs of the Large Language Model 108.

In this example, the LLM output vector 122 is shown as a vector having 16 values *x₁*, *x₂*, *x₃*, ... *x₁₆.* The LLM output vector 122 represents output tokens generated by the Large Language Model 108 responsive to query 112 and based on the retrieved documents 116. In the context of a Large Language Model (LLM), "tokens" refer to the basic units of text processed by the model. These tokens can be words, parts of words (like prefixes or suffixes), or even individual characters, depending on the granularity of the language model's design. Tokens serve as the input and output building blocks for the model during training and inference. Large Language Models tokenize text data into these smaller components to analyze, understand, and generate language. The process involves breaking down input text into a sequence of tokens, which the model can then process sequentially or in parallel to perform various natural language processing tasks. This tokenization step is crucial as it directly impacts the model's ability to understand the nuances of language, including syntax and semantics. The representation and handling of tokens are fundamental aspects that influence the model's performance, efficiency, and capability in generating coherent and contextually relevant text. The LLM output vector 122 is effectively a numerical representation of the tokens.

As can be seen, the Variational Autoencoder 110 maps the LLM output vector 122 through one or more encoder hidden layer(s) 306 having weights, to a distribution in an encoder output layer 308. The encoder output layer 308 produces an encoder output vector 322 having six dimensions defining the reduced dimensions of the latent space, with values for the mean for each dimension *µ₁*,*µ₂*,*µ₃*, ... *µ₆* and the standard deviation for the Gaussian distribution in each dimension *σ₁*, *σ₂*, *σ₃*, ... *σ₆.* Thus an LLM output vector 122 *x* is mapped to an encoder output vector 322 defining a distribuion in a reduced dimension latent space *z*. In this respect the distribution in a different dimensions of the latent space may represent a multivariate Gaussian distribution. This stochastic approach introduces randomness into the latent representations, enabling the generation of new data points.

The decoder 312 includes a sampler 310 for sampling points from the distribution in the latent space *z* defined by the encoder output vector 322 to generate a reparameterised decoder input vector 324 having specific values in the latent space *z*. It should be noted that the sampler 310, using a random number generator to randomly draw from the distribution in *z*, can generate from the same encoder output vectors 322, many different values *ẑ* for the decoder input vector 324. This helps the Variational Autoencoder 110 build a smoothed picture of the distribution of normal outputs of the LLM in the latent space.

The decoder 312 then has one or more decoder hidden layer(s) 316 and a decoder output layer 318 which have nodes that correspond to the encoder hidden layer(s) 306 and encoder input layer 304 in structure. In this respect the decoder 312 is the corresponding reverse of the encoder 302. The decoder hidden layer(s) 316 have weights that map the decoder input vector 324 to the decoder output layer 318. Through the training method 400, the Variational Autoencoder 110 is trained to reconstruct the at the decoder output layer 318 a reconstructed version of the LLM output vector 326 *x̂* from the sample of the latent representation in the decoder input vector 324.

Thus FIG. 4 is a flowchart showing an example training method 400 for training the Variational Autoencoder shown in FIG. 3 in accordance with aspects of the present disclosure;

Although the example method 400 depicts a particular sequence of operations, the sequence may be altered without departing from the scope of the present disclosure. For example, some of the operations depicted may be performed in parallel or in a different sequence that does not materially affect the function of the method 400. In other examples, different components of an example device or system that implements the method 400 may perform functions at substantially the same time or in a specific sequence.

In step 402, the computing apparatus 200 receives, for example through the input/output module 208, a labelled training dataset of LLM output vectors each representing output tokens generated by the LLM responsive to a query and each labelled as either a normal LLM output vector or a hallucination LLM output vector.

The labelling may be generated by one or more domain knowledge experts. For example, the training dataset may be manually or automatically checked by experts with knowledge of the closed domain knowledge base 106 to ascertain whether each example LLM output vector in the training dataset is a normal output, or whether it is a hallucination output. The manual labelling of the training dataset by domain knowledge experts allows the characteristic distribution of normal outputs of the LLM and characteristic distribution of hallucination outputs of the LLM in the latent space to be discovered through training of the Variational Autoencoder 110.

In embodiments, the method may also include generating a training dataset for the Variational Autoencoder using a prompting Large Language Model (LLM) to generate queries for the Retrieval-Augmented Generation (RAG) enhanced Large Language Model (LLM) to generate LLM output vectors. The prompting Large Language Model may be implemented by the computing apparatus 200, to generate the training dataset to explore the latent space. In that respect, the prompting Large Language Model (LLM) may be configured to search across the distribution of outputs of the LLM in the latent space. In this way, a prompting Large Language Model can be used to generate the training dataset. In other implementations, a training dataset may be manually created by domain knowledge experts crafting queries for the LLM to generate a training dataset of LLM output vectors that allow the distribution of outputs of the LLM in the latent space to be explored for the closed domain knowledge base.

Once the training dataset is received and stored, for example in memory 202, in step 404, the training of the weights of the hidden layers of the encoder and decoder parts of the Variational Autoencoder 110 proceeds in a stochastic or batch-wise manner.

In step 404, for each one of plural LLM output vectors of the training dataset, training the Variational Autoencoder 110 commences by inputting the LLM output vector corresponding to the training dataset example to the encoder input layer 304 of the encoder 302.

In step 406, the encoder output layer 308 generates an encoder output vector 322 having values representing a distribution of the LLM output vector of the training dataset example in the dimensionally reduced latent space *z*.

In step 408, the sampler 310 samples values from the distribution defined by the encoder output vector 322 to generate a decoder input vector 324 representative of the LLM output vector of the training dataset example in the latent space.

In step 410, the decoder input vector 324 is input to the decoder input layer 314.

In step 412, a reconstructed version of the LLM output vector 326 is generated by the decoder output layer 318.

In step 414, method 400 determines a loss function characterising a reconstruction error between the LLM output vector and the reconstructed version of the LLM output vector. The loss function may also take into account other metrics such as the Kullback-Liebler divergence.

In step 416, the computing apparatus 200 operating the training method 400, using an appropriate optimisation algorithm operating on the loss function, updates the connecting node weights of the hidden layers of the encoder neural network and decoder neural network to seek to minimise the loss function. For example, gradient descent may be used to calculate the gradient of the loss function characterising the error in a backward pass through the layers of the Variational Autoencoder 110 using the chain rule and by automatic differentiation of the function stack used by the processor. In this way, the weights at the nodes in the one or more encoder hidden layer(s) 306 and one or more decoder hidden layer(s) 316 may be updated to seek to minimise the loss function and reduce the reconstruction error between the reconstructed version of the LLM output vector 326 and the LLM output vector from the training dataset.

In decision step 418, method 400 checks whether the loss function converges (e.g. has reduced from the previous epoch to the present epoch by an amount less than a threshold level). If it has not, the training method 400 returns to step 404 and repeats the training method steps 406 to 416 for the next example or batch of examples from the training dataset in the next epoch.

If the loss function has been found to converge, the training method 400 ends in step 420 and the Variational Autoencoder 110 is deemed to be sufficiently trained as it has been found to effectively reconstruct input LLM output vectors.

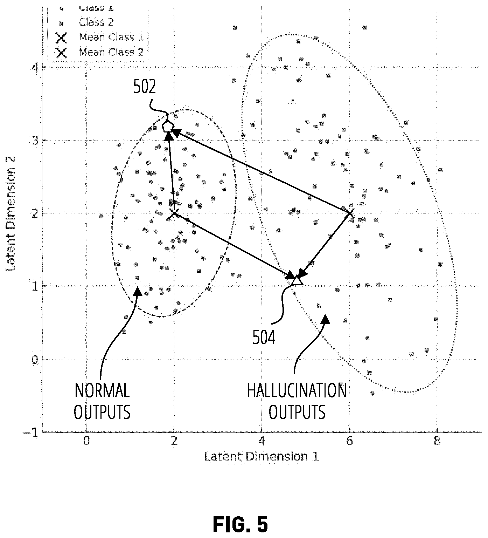

As a result of this training, based on the labelling of the LLM output vectors in the training dataset, the training of the Variational Autoencoder thereby generates characteristic distributions of normal outputs and hallucination outputs of the LLM in the latent space based on the documents in the closed domain knowledge base. This is as shown in FIG. 5.

FIG. 5 shows an example learned characteristic distribution of normal outputs of the LLM and learned characteristic distribution of hallucination outputs of the LLM in a simplified representation of the latent space of the trained Variational Autoencoder as shown in FIG. 4.

In the context of Variational Autoencoders (VAEs), the latent space is the abstract, multidimensional space into which the LLM output vectors are encoded, capturing the essential, underlying features of the distribution of the outputs of the RAG-enhanced LLM. This space is "latent" because it is not directly observed but instead inferred from the input data through the VAE's encoding process. The latent space is represented by a continuous, compact distribution, typically Gaussian, where each dimension correlates with latent attributes or factors of variation within the data. By modelling the encoded data in this probabilistic manner, VAEs can be used to generate or understand new data by sampling from the latent space distribution. A key property of the latent space in VAEs is dimensionality reduction, by which the latent space has a much lower dimensionality compared to the original input space, making it efficient for capturing and representing the core information of the data. The output distributions in the latent space are also continuous, in that small changes in the latent space result in small, continuous changes in the generated output when decoded, allowing for meaningful interpolation and understanding of new data instances. A further characteristic of the latent space is that the VAE learns and encodes a structured representation of the input data, where similar data points are located near each other, and different attributes or features can be disentangled by being located distnat from each other along the various dimensions of the latent space. This latent space concept enables VAEs to serve as powerful models for learning and understanding the underlying structure of data.

It should be noted that FIG. 5 shows a simplified representation of the characteristic distributions of the normal outputs and hallucination outputs of the RAG-enhanced LLM in the training dataset examples in only two latent dimensions. Futher, the distribtions are indicated by the means of the examples for each labelled class, and a gaussian distribution fit based on the underlying distributions found through training. Of course, a number of different approaches are possible to characterise the distributions once the are discovered through learning. For example, the Gaussians of the training examples can be aggregated to discover an overall distribution.

It should be noted, however, that the distributions are discovered by running the training dataset through the Variational Autoencoder 110 once the training has completed, to obtain the mapping of the populations of the normal outputs and hallucination outputs to the latent space *z* by the Variational Autoencoder 110 having the trained weights. In this way, the Variational Autoencoder 110 can accurately characterise the distribution of normal outputs of the LLM based on a closed list of documents, or a closed data repository. The VAE can be periodically re-trained to update the learned distributions if new documents are added to the closed domain knowledge base, but the Variational Autoencoder 110 can learn the distribution of a closed set of known documents and reliably identify candidate hallucinations.

In the example shown in FIG. 5, in the two dimensions shown in the latent space *z*, the normal outputs are shown to have a tighter distribution based on the more densely packed presence of the normal outputs in the latent space produced by the trained Variational Autoencoder 110, when compared to the distribution of hallucination outputs of the LLM.

The mean position of Gaussian for the populations of the normal outputs and the hallucination outputs are each marked by an X as shown. This effectively marks a centroid for the respective distributions.

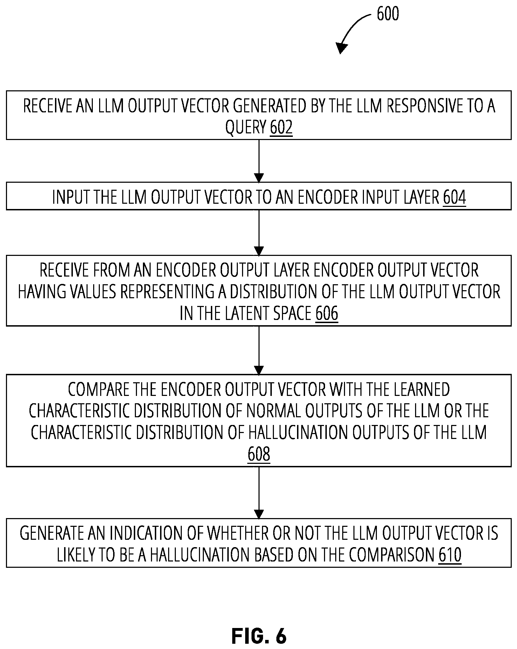

For new example LLM output vectors 122 received at runtime and encoded by the Variational Autoencoder 110 to the latent space *z*, such as runtime example 502 (the encoded mean of which is shown in FIG. 5. by a pentagon) and runtime example 504 (the encoded mean of which is shown in FIG. 5. by a triangle), the distance from the centres of the distribution of normal outputs of the LLM and the distribution of hallucination outputs of the LLM may be used as a metric indicative of the dissimilarity between the encoder output vector and the distribution of normal outputs of the LLM. This can be used to identify candidate hallucinations by the runtime method 600 shown in FIG. 6.

FIG. 6 is a flowchart showing an example runtime method for using the trained Variational Autoencoder shown in FIG. 3 to detect candidate hallucinations in outputs of a RAG-enhanced LLM in accordance with aspects of the present disclosure. This may be implemented in the computing apparatus 200 by the runtime module 212 working together with the hallucination candidate determination module 214.

In step 602, the computing apparatus 200 receives at the input/output module 208 from the RAG-enhanced LLM (either from the Retrieval-Augmented Generation framework 104 or from the Large Language Model 108 directly) an LLM output vector 122 representing output tokens generated by the Large Language Model 108 responsive to a query 112 from the user device 102 at runtime. The Large Language Model 108 has generated the LLM output vector 122 based on the query 112 and the retrieved documents 116 provided to it by the Retrieval-Augmented Generation framework 104.

In step 604, runtime module 212 inputs the LLM output vector 122 to the encoder input layer 304 of the encoder 302 part of the Variational Autoencoder 110 trained by the method 400 set out in FIG. 4. As before, the trained Variational Autoencoder 110 is configured such that the encoder input layer 304 is arranged to have nodes corresponding to the LLM output vector 122 generated by the Large Language Model 108.

In step 606, through operation of the Variational Autoencoder 110, specifically by the encoder hidden layer(s) 306 mapping the LLM output vector 122 to the encoder output layer 308, an encoder output vector 322 is received from the encoder output layer 308. The encoder output vector 322 has values representing a distribution of the LLM output vector 122 in the dimensionally reduced latent space. Example LLM output vectors received at runtime and encoded to the latent space *z* are shown in FIG. 5 as that runtime example 502 (shown in FIG. 5. by a pentagon) and runtime example 504 (shown in FIG. 5. by a triangle).

In step 608, the hallucination candidate determination module 214 compares the encoder output vector 322 generated by the encoder 302 encoding the LLM output vector 122 to the latent space *z* with the learned characteristic distribution of normal outputs of the LLM and/or distribution of hallucination outputs of the LLM as encoded into the latent space *z* and learned through the training of the Variational Autoencoder 110 on the training dataset. The hallucination candidate determination module 214 may be configured to compare the encoder output vector 322 with the learned characteristic distribution of normal outputs of the LLM and/or the hallucination outputs of the LLM by determining a metric representative of a distance between the encoder output vector 322 and the learned characteristic distribution of normal outputs of the LLM and/or the hallucination outputs of the LLM. For example, as shown in FIG. 5, a distance from the mean of the encoder output vector 322 in the latent space *z* and the centroid or mean of the distribution of normal outputs of the LLM and/or the distribution of hallucination outputs of the LLM may be determined. The distance metric may be indicative of the similarity/dissimilarity between the encoder output vector and the distribution of normal outputs of the LLM and distribution of hallucination outputs of the LLM, respectively. That is, the greater the distance, the greater the dissimilarity.

In step 610, hallucination candidate determination module 214 generates an indication of whether or not the LLM output vector is likely to be a hallucination based on the comparison. The hallucination candidate determination module 214 may be configured to generate an indication of whether or not the LLM output vector 122 is likely to be a hallucination based on the distance metric determined in step 608. This may include comparing the determined distance metric to a threshold distance value above which encoder output vector 322 is deemed to be a candidate hallucination. That is, when the distance metric relative to the distribution of normal outputs of the LLM is above a certain threshold (which may be set based on a deemed risk level), the LLM output vector 122 may be deemed to be a candidate hallucination and the hallucination candidate determination module 214 may generate an indication accordingly and communicate this to the user device 102 together with the LLM output vector 122 (as shown in FIG. 1 by the LLM output + indication 124). This can be seen, for the runtime example 504, as shown in FIG. 5, the distance metric from the centroid of the distribution of normal outputs of the LLM is relatively large, and the distance metric from the centroid of the distribution of hallucination outputs of the LLM is relatively small, and so the hallucination candidate determination module 214 may assess, based on thresholds, that the LLM output vector 122 mapping to runtime example 504 is a candidate hallucination and may generate an indication accordingly.

Also, when the distance metric relative to the distribution of normal outputs of the LLM is below a certain threshold (which may be set based on a deemed risk level), the LLM output vector 122 may be deemed to not be a candidate hallucination and the hallucination candidate determination module 214 may generate an indication accordingly and communicate this to the user device 102 together with the LLM output vector 122 (as shown in FIG. 1 by the LLM output + indication 124). This can be seen, for the runtime example 502, as shown in FIG. 5, the distance metric from the centroid of the distribution of normal outputs of the LLM is relatively small, and the distance metric from the centroid of the distribution of hallucination outputs of the LLM is relatively large, and so the hallucination candidate determination module 214 may assess, based on thresholds, that the LLM output vector 122 mapping to runtime example 504 is not a candidate hallucination and may generate an indication accordingly.

In this way, a metric of the likelihood of an LLM output vector being a hallucination can be generated and a threshold applied above which an LLM output vector is deemed to be a candidate hallucination. The distribution of the document or documents stored in the closed domain knowledge base can be identified using a Variational Auto Encoder (VAE) architecture with a small latent space dimension to characterise the distribution of normal outputs of the LLM. In this way, the borders of the contextual meaning of the document and LLM responses deemed normal and non-hallucinatory can be automatically learned and clearly understood, such that outputs from the LLM falling outside this distribution in the latent space can be identified as candidate hallucinations. This allows them to be treated accordingly.

To act on this, the computing apparatus 200 may use the indication to enhance the quality of the output of the RAG-enhanced LLM, or improve its usefulness to the end user of the user device 102. For example, when an indication is generated that the LLM output vector may be likely to be a hallucination, the computing apparatus 200, or specifically the hallucination candidate determination module 214, may be configured to providing an alert to the LLM (or to the user device 102) that the LLM output vector 122 may be a candidate hallucination (this may be represented by the indication itself, or by an alert provided in addition to the indication). In this way the Large Language Model 108 and or the user device 102 may become aware that the LLM output vector 122 is at risk of being a hallucination, and it may be treated accordingly.

For example, the hallucination candidate determination module 214 may provide an instruction to the Large Language Model 108 or user device 102 to discard the LLM output vector 122. In this way, the frequency of incidents of the user device 102 relying on LLM outputs that are hallucinations can be reduced or avoided completely.

Alternatively or in addition, the hallucination candidate determination module 214 may provide an instruction to the Large Language Model 108 to update the prompt (generated from the query 112) provided to the Retrieval-Augmented Generation (RAG) enhanced Large Language Model (LLM) and re-run the query, the query/prompt being updated to reduce the likelihood that the LLM output vector is a candidate hallucination. That is, the hallucination candidate determination module 214 may cause the query 112 or the prompt to be updated to explicitly exclude or mitigate the updated LLM output vector 122 including a response similar to that of the previous LLM output vector was found to be a candidate hallucination.

In this way, the indication of a candidate hallucination may be used to enhance the reliability of the RAG-enhanced LLM by for example, alerting the user such that the user is aware of the risk, causing the LLM output vector to be discarded, or causing the LLM to provide another LLM output vector where the prompt is updated to reduces the likelihood the LLM output vector is a candidate hallucination.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. In particular, any dependent claims may be combined with any of the independent claims and any of the other dependent claims.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A method for use in detecting candidate hallucinations in outputs of a Retrieval-Augmented Generation (RAG) enhanced Large Language Model (LLM) trained to retrieve documents from a closed domain knowledge base responsive to an input query, and generate an LLM output vector based on the query and any retrieved documents, the method comprising:
receiving from the LLM an LLM output vector representing output tokens generated by the LLM responsive to a query;
inputting the LLM output vector to an encoder input layer of an encoder part of a neural network configured as a Variational Autoencoder, the encoder input layer arranged to have nodes corresponding to the LLM output vector;
receiving from an encoder output layer of the encoder part of the Variational Autoencoder an encoder output vector having values representing a distribution of the LLM output vector in a dimensionally reduced latent space, the encoder output layer being connected to the encoder input layer through one or more hidden layers having nodes with weights trained together with a corresponding decoder part of the Variational Autoencoder to allow the decoder part to reconstruct at a decoder output layer thereof the LLM output vector from the encoded distribution in the latent space, the Variational Autoencoder having been trained using a training dataset of LLM output vectors generated by the LLM from the retrieved documents responsive to input queries, the training dataset labelled as normal outputs of the LLM or hallucination outputs of the LLM, the training of the Variational Autoencoder thereby generating characteristic distributions of normal outputs and hallucination outputs of the LLM in the latent space based on the documents in the closed domain knowledge base;
comparing the encoder output vector with the learned characteristic distribution of normal outputs of the LLM and/or the distribution of hallucination outputs of the LLM; and
generating an indication of whether or not the LLM output vector is likely to be a hallucination based on the comparison.

2. The method of claim 1, wherein the closed domain knowledge base consists of a list of specified documents or a structured data repository of finite and defined scope.

3. The method of claim 1 or 2, wherein the trained VAE has learned the distribution and structure of the documents in the closed domain knowledge base in the low dimension latent space, the distribution and structure of the documents in the closed domain knowledge base being generated by the VAE characterising the normal outputs of the LLM generated responsive to queries by the LLM retrieving documents from the closed domain knowledge base.

4. The method of any one of claims 1 to 3, wherein comparing the encoder output vector with the learned characteristic distribution of normal outputs of the LLM and/or the hallucination outputs of the LLM comprises:
determining a metric representative of a distance between the encoder output vector and the learned characteristic distribution of normal outputs of the LLM and/or the hallucination outputs of the LLM, wherein the distance metric is indicative of the dissimilarity between the encoder output vector and the distribution of normal outputs of the LLM.

5. The method of claim 4, wherein generating an indication of whether or not the LLM output vector is likely to be a hallucination based on the comparison comprises:
determining, based on the determined distance metric, a metric indicating whether the LLM output vector is likely to be an hallucination.

6. The method of claim 5, wherein determining, based on the determined distance metric, a metric indicating whether the LLM output vector is likely to be an hallucination comprises:
comparing the determined distance metric to a threshold distance value above which encoder output vector is a candidate hallucination.

7. The method of any one of claims 1 to 6, further comprising:
when an indication is generated that the LLM output vector is likely to be a hallucination, performing one or more of:
providing an alert to the LLM that the LLM output vector is a candidate hallucination;
providing an instruction to the LLM to discard the LLM output vector;
providing an instruction to the LLM to update the prompt provided to the Retrieval-Augmented Generation (RAG) enhanced Large Language Model (LLM) and re-run the query, the prompt being updated to reduce the likelihood that the LLM output vector is a candidate hallucination.

8. The method of any one of claims 1 to 7, further comprising generating a training dataset for the Variational Autoencoder using a prompting Large Language Model (LLM) to generate queries for the Retrieval-Augmented Generation (RAG) enhanced Large Language Model (LLM) to generate LLM output vectors, the generated LLM output vectors being used to provide a training set of labelled LLM output vectors used to train the Variational Autoencoder to determine the characteristic distribution of normal outputs of the LLM and/or the distribution of hallucination outputs of the LLM.

9. The method of claim 8, wherein the prompting Large Language Model (LLM) is configured to search across the distribution of outputs of the LLM in the latent space.

10. The method of any one of claims 1 to 9, further comprising, receiving a labelled training dataset of LLM output vectors each labelled as either a normal LLM output vector or a hallucination LLM output vector, wherein the labelling is generated by one or more domain knowledge experts.

11. The method of claim 10, further comprising:
for each one of plural LLM output vectors of the training dataset, training the Variational Autoencoder by:
inputting the LLM output vector to the encoder input layer of the encoder part of a Variational Autoencoder;
receiving from an encoder output layer of the encoder part of the Variational Autoencoder an encoder output vector having values representing a distribution of the LLM output vector in a dimensionally reduced latent space;
sampling values from the distribution defined by the encoder output vector to generate a decoder input vector representative of the LLM output vector in the latent space;
inputting the decoder input vector to a decoder input layer of the decoder part of the Variational Autoencoder;
receiving from a decoder output layer of the decoder part of the Variational Autoencoder a reconstructed version of the LLM output vector, the decoder output layer being connected to the decoder input layer through one or more hidden layers having nodes with weights;
determining a loss function characterising a reconstruction error between the LLM output vector and the reconstructed version of the LLM output vector; and
using an appropriate optimisation algorithm operating on the loss function, updating the connecting node weights of the hidden layers of the encoder neural network and decoder neural network to seek to minimise the loss function;
until the loss function converges and the Variational Autoencoder effectively reconstructs the LLM output vector.

12. The method of claim 11, further comprising, based on the labels applied to the LLM output vectors in the training dataset:
determining the distribution of normal outputs of the LLM in the latent space; and
determining the distribution of hallucination outputs of the LLM in the latent space.

13. A computing apparatus for use in detecting candidate hallucinations in outputs of a Retrieval-Augmented Generation (RAG) enhanced Large Language Model (LLM) trained to retrieve documents from a closed domain knowledge base responsive to an input query, and generate an LLM output vector based on the query and any retrieved documents, the computing apparatus comprising:
one or more processors; and
a memory storing instructions that, when executed by the processor, configure the apparatus to:
receive from the LLM an LLM output vector representing output tokens generated by the LLM responsive to a query;
input the LLM output vector to an encoder input layer of an encoder part of a neural network configured as a Variational Autoencoder, the encoder input layer arranged to have nodes corresponding to the LLM output vector;
receive from an encoder output layer of the encoder part of the Variational Autoencoder an encoder output vector having values representing a distribution of the LLM output vector in a dimensionally reduced latent space, the encoder output layer being connected to the encoder input layer through one or more hidden layers having nodes with weights trained together with a corresponding decoder part of the Variational Autoencoder to allow the to decoder part to reconstruct at a decoder output layer thereof the LLM output vector from the encoded distribution in the latent space, the Variational Autoencoder having been trained using a training dataset of LLM output vectors generated by the LLM from the retrieved documents responsive to input queries, the training dataset labelled as normal outputs of the LLM or hallucination outputs of the LLM, the training of the Variational Autoencoder thereby generating characteristic distributions of normal outputs and hallucination outputs of the LLM in the latent space based on the documents in the closed domain knowledge base;
compare the encoder output vector with the learned characteristic distribution of normal outputs of the LLM and/or the distribution of hallucination outputs of the LLM; and
generate an indication of whether or not the LLM output vector is likely to be a hallucination based on the comparison.

14. A non-transitory computer-readable storage medium, the computer-readable storage medium including instructions for use in detecting candidate hallucinations in outputs of a Retrieval-Augmented Generation (RAG) enhanced Large Language Model (LLM) trained to retrieve documents from a closed domain knowledge base responsive to an input query, and generate an LLM output vector based on the query and any retrieved documents, wherein, when executed by one or processors of a computing apparatus, the instructions cause the computing apparatus to:
receive from the LLM an LLM output vector representing output tokens generated by the LLM responsive to a query;
input the LLM output vector to an encoder input layer of an encoder part of a neural network configured as a Variational Autoencoder, the encoder input layer arranged to have nodes corresponding to the LLM output vector;
receive from an encoder output layer of the encoder part of the Variational Autoencoder an encoder output vector having values representing a distribution of the LLM output vector in a dimensionally reduced latent space, the encoder output layer being connected to the encoder input layer through one or more hidden layers having nodes with weights trained together with a corresponding decoder part of the Variational Autoencoder to allow the to decoder part to reconstruct at a decoder output layer thereof the LLM output vector from the encoded distribution in the latent space, the Variational Autoencoder having been trained using a training dataset of LLM output vectors generated by the LLM from the retrieved documents responsive to input queries, the training dataset labelled as normal outputs of the LLM or hallucination outputs of the LLM, the training of the Variational Autoencoder thereby generating characteristic distributions of normal outputs and hallucination outputs of the LLM in the latent space based on the documents in the closed domain knowledge base;
compare the encoder output vector with the learned characteristic distribution of normal outputs of the LLM and/or the distribution of hallucination outputs of the LLM; and
generate an indication of whether or not the LLM output vector is likely to be a hallucination based on the comparison.

15. Method of training a Variational Autoencoder (VAE) for use in detecting candidate hallucinations in outputs of a Retrieval-Augmented Generation (RAG) enhanced Large Language Model (LLM) trained to retrieve documents from a closed domain knowledge base responsive to an input query, and generate an LLM output vector based on the query and any retrieved documents, the method comprising:
receiving a labelled training dataset of LLM output vectors each representing output tokens generated by the LLM responsive to a query and each labelled as either a normal LLM output vector or a hallucination LLM output vector;
for each one of plural LLM output vectors of the training dataset, training the Variational Autoencoder by:
inputting the LLM output vector to an encoder input layer of an encoder part of a Variational Autoencoder, the encoder input layer arranged to have nodes corresponding to the LLM output vector;
receiving from an encoder output layer of the encoder part of the Variational Autoencoder an encoder output vector having values representing a distribution of the LLM output vector in a dimensionally reduced latent space, the encoder output layer being connected to the encoder input layer through one or more hidden layers having nodes with weights;
sampling values from the distribution defined by the encoder output vector to generate a decoder input vector representative of the LLM output vector in the latent space;
inputting the decoder input vector to a decoder input layer of a corresponding decoder part of the Variational Autoencoder;
receiving from a decoder output layer of the decoder part of the Variational Autoencoder a reconstructed version of the LLM output vector, the decoder output layer being connected to the decoder input layer through one or more hidden layers having nodes with weights;
determining a loss function characterising a reconstruction error between the LLM output vector and the reconstructed version of the LLM output vector; and
using an appropriate optimisation algorithm operating on the loss function, updating the connecting node weights of the hidden layers of the encoder neural network and decoder neural network to seek to minimise the loss function;
until the loss function converges and the Variational Autoencoder effectively reconstructs the LLM output vector;
wherein, based on the labelling of the LLM output vectors in the training dataset, the training of the Variational Autoencoder thereby generates characteristic distributions of normal outputs and hallucination outputs of the LLM in the latent space based on the documents in the closed domain knowledge base.
